# EUROPÄISCHE PATENTANMELDUNG

(11) **EP 1 609 764 A1**
(43) Veröffentlichungstag der Anmeldung: **28.12.2005**
(21) Anmeldenummer: 05013405.5
(22) Anmeldetag: 22.06.2005
(51) Int. Cl.: C02F 3/28

(54) **Tropfkörpereinheit einer Abwasserbehandlungsanlage**

(30) Priorität: 23.06.2004 DE 102004030366
(71) Anmelder: Munters Euroform GmbH, 52072 Aachen (DE)
(72) Erfinder: Marggraff, Martin, 52146 Würselen (DE)
(74) Vertreter: Hauck, Graalfs, Wehnert, Döring, Siemons

(57) **Zusammenfassung**

Es wird eine Tropfkörpereinheit (1) einer Abwasserbehandlungsanlage, insbesondere zur Denitrifikation, mit einem von einem porösen Körper (2) gebildeten Tropfkörper, einer Anlage zum Verrieseln des Abwassers über dem Tropfkörper und einer Tropfkörperabdeckung (9), um das Eindringen von Luftsauerstoff in den Tropfkörper zu verhindern, beschrieben. Zur Vermeidung einer aufwendigen, einen Luftabschluß bildenden Dachkonstruktion ist bei einer ersten Ausführungsform die Tropfkörperabdeckung unterhalb der Verrieselungsanlage benachbart zur Tropfkörperoberseite angeordnet. Bei einer zweiten Ausführungsform wird die Verrieselungsanlage durch ein direkt auf dem Tropfkörper aufliegendes oder in diesen eingesenktes Rohrsystem (8) gebildet. Bei einer dritten Ausführungsform besitzt der Tropfkörper im oberen Bereich eine Schicht (3) geringer Porosität, die nach dem Anwachsen des biologischen Filmes den Tropfkörper luftdicht abschließt.

## Beschreibung

Die vorliegende Erfindung betrifft eine Tropfkörpereinheit einer Abwasserbehandlungsanlage mit
einem von einem porösen Körper gebildeten Tropfkörper,
einer Anlage zum Verrieseln des Abwassers über dem Tropfkörper und
einer Tropfkörperabdeckung, um das Eindringen von Luftsauerstoff in den Tropfkörper zu verhindern.

Tropfkörpereinheiten sind bekannte Bestandteile von Abwasserbehandlungsanlagen. Sie bestehen aus einem von einem porösen Körper gebildeten Tropfkörper, auf den das zu behandelnde Abwasser verrieselt wird. Der poröse Körper wird üblicherweise von bestimmten Füllmaterialien (Schlacke, mineralische Schüttkörper etc.) gebildet, die dem Tropfkörper eine gewünschte Porosität verleihen. Im Betrieb des Tropfkörpers bildet sich an den Füllmaterialien ein biologischer Film aus, mittels dem die Abwasserbehandlung durchgeführt wird.

Bei bestimmten Verfahren der Abwasserbehandlung muß der Tropfkörper abgedeckt werden, um das Eindringen von Luftsauerstoff in den Tropfkörper zu verhindern. Dies ist beispielsweise dann der Fall, wenn man mit dem Tropfkörperverfahren eine gezielte Denitrifikation durchführt. Hierbei ist es bekannt, über dem Abwasserverteilsystem, bei dem es sich in der Regel um einen Drehsprenger handelt, eine feste Dachkonstruktion, beispielsweise eine GFK-Kuppel, zu montieren und auf diese Weise einen Luftabschluß für den Tropfkörper herzustellen.

Eine derartige feste Dachkonstruktion, insbesondere eine GFK-Kuppel, ist jedoch sehr teuer, insbesondere bei größeren Durchmessern. Darüber hinaus ist der Luftabschluß in der Regel nicht vollständig, da die Dachkonstruktion das Wasserverteilsystem mit abdecken muß und somit stabile Konstruktionen mit Tragsystemen benötigt werden, was zu Abdichtungsproblemen führen kann. Zur Wartung des Wasserverteilsystems muß die Dachkonstruktion zumindest teilweise entfernt werden, was aufwendig ist und wiederum Dichtungsprobleme mit sich bringt.

Der vorliegenden Erfindung liegt die Aufgabe zugrunde, eine baulich besonders einfach ausgebildete und besonders kostengünstig zu erstellende Tropfkörpereinheit der eingangs beschriebenen Art zu schaffen.

Diese Aufgabe wird bei einer ersten Ausführungsform der Erfindung durch eine Tropfkörpereinheit der eingangs wiedergegebenen Art gelöst, die dadurch gekennzeichnet ist, daß die Tropfkörperabdeckung unterhalb der Verrieselungsanlage benachbart zur Tropfkörperoberseite angeordnet ist und eine Vielzahl von kleinen Abwasserdurchtrittsöffnungen aufweist.

Bei dieser Ausführungsform der Erfindung ist die Tropfkörperabdeckung der Tropfkörperoberseite direkt zugeordnet, und die Verrieslungsanlage befindet sich oberhalb der Abdeckung. Damit das von der Verrieslungsanlage abgegebene Abwasser auf den Tropfkörper gelangen kann, weist die Tropfkörperabdeckung eine Vielzahl von kleinen Abwasserdurchtrittsöffnungen auf, bildet somit ein Verteilungssystem für das Abwasser, so daß dieses in flächiger Verteilung auf die Oberseite des Tropfkörpers gelangen kann. Bei dieser Konstruktion kann auf eine aufwendige Dachkonstruktion zur Abdeckung des Tropfkörpers und der Verrieselungsanlage verzichtet werden. Statt dessen kann eine einfache Abdeckung Verwendung finden, die keine tragende Funktion besitzen muß. Hierfür eignet sich insbesondere eine flexible Folie.

Die über der Tropfkörperabdeckung angeordnete Verrieselungsanlage kann beispielsweise als herkömmlicher Drehsprenger ausgebildet sein. Bevorzugt wird jedoch eine Lösung, bei der die Verrieselungsanlage als sich über den Tropfkörperquerschnitt erstreckendes, fest installiertes Rohrsystem mit Öffnungen/Düsen zum Abwasseraustritt ausgebildet ist. Bei dieser Ausführungsform wird auch ein teurer Drehsprenger vermieden, so daß die Einheit weiter vereinfacht und verbilligt werden kann. Ein weiterer Vorteil dieser Ausführungsform besteht darin, daß rechteckige Baukörper ermöglicht werden, die modular ergänzt werden können. Dies kann insbesondere bei kleinen Anlagen vorteilhaft sein.

In Weiterbildung der Erfindung ist im Betrieb der Tropfenabscheidereinheit auf der Tropfkörperabdeckung eine Abwasserschicht vorhanden. Diese Abwasserschicht verbessert den Luftabschluß und dient zum weiteren Schutz der Tropfkörperabdeckung, bei der es sich vorzugsweise um eine flexible Folie handelt.

Die Folie ist vorzugsweise nach Art einer Schwimmbadabdekkung öffenbar und schließbar, so daß eine einfache Wartung möglich ist. Sie kann Bereiche aufweisen, die für Inspektionen geöffnet werden können. Sie kann ferner durch Rippen in mehrere Sektoren aufgeteilt sein.

Was die als fest installiertes Rohrsystem ausgebildete Verrieselungsanlage betrifft, so setzt sich das Rohrsystem vorzugsweise aus einer Vielzahl von Verteilerrohren zusammen, die entsprechende Öffnungen/Düsen zum Abwasseraustritt aufweisen und insbesondere aus Kunststoff oder Stahl bestehen. Ein oder mehrere Zulaufrohre versorgen die einzelnen Verteilerrohre mit Abwasser. Die Verteilerrohre können beispielsweise über Öffnungen herausgezogen und gereinigt werden.

Bei einer zweiten Ausführungsform der vorliegenden Erfindung wird die vorstehend genannte Aufgabe bei einer Tropfkörpereinheit der eingangs beschriebenen Art erfindungsgemäß dadurch gelöst, daß die Verrieselungsanlage durch ein direkt auf dem porösen Körper aufliegendes oder in diesen eingesenktes Rohrsystem gebildet ist, auf bzw. über dem die Tropfkörperabdeckung angeordnet ist.

Bei dieser Ausführungsform befindet sich die Verrieselungsanlage unterhalb der Tropfkörperabdeckung, wie dies an sich auch beim Stand der Technik der Fall ist, wird jedoch durch ein direkt auf dem porösen Körper aufliegendes oder in diesen eingesenktes Rohrsystem gebildet. Bei diesem Rohrsystem handelt es sich ebenfalls um ein sich über den Tropfkörperquerschnitt erstreckendes, fest installiertes Rohrsystem mit Öffnungen/Düsen zum Abwasseraustritt. Das Rohrsystem kann so ausgebildet sein, wie dies in Verbindung mit der ersten Ausführungsform beschrieben wurde. Ein aufwendiger Drehsprenger wie beim Stand der Technik kommt daher auch bei dieser Ausführungsform in Fortfall.

Die Tropfkörperabdeckung ist auch bei dieser Ausführungsform vorzugsweise als flexible, im wesentlichen luftundurchlässige Folie ausgebildet. Damit ist sichergestellt, daß sich oberhalb des Rohrsystems ein luftdichter Abschluß für den Tropfkörper ergibt.

Es versteht sich, daß bei beiden Ausführungsformen die Tropfkörperabdeckung, insbesondere flexible Folie, auch seitlich so an ein den Tropfkörper aufnehmendes Bauwerk, insbesondere einen Behälter, angeschlossen ist, daß sich hier eine luftdichte Verbindung ergibt.

Eine dritte Ausführungsform der Erfindung zur Lösung der vorstehend genannten Aufgabe betrifft eine Tropfkörpereinheit der eingangs wiedergegebenen Art, die dadurch gekennzeichnet ist, daß der poröse Körper im oberen Bereich eine im Vergleich zum übrigen Bereich derart geringere Porosität besitzt, daß der anwachsende biologische Film den Körper dort weitgehend verschließt und damit einen Lufteintritt verhindert. Bei dieser Ausführungsform findet keine vom Tropfkörper getrennte Tropfkörperabdeckung Verwendung, sondern diese Abdeckung wird vom Tropfkörper selbst gebildet. Der obere Bereich des porösen Körpers wird so ausgebildet, daß hier Porositätsverhältnisse geschaffen werden, die garantieren, daß der sich im Betrieb der Tropfkörpereinheit ausbildende biologische Film den Tropfkörper in diesem Bereich weitgehend verschließt und damit auf natürliche Weise einen Lufteintritt verhindert. Natürlich soll durch diesen oberen Bereich die Berieselung des Tropfkörpers mit Abwasser bzw. das Durchdringen desselben vom Abwasser nicht oder nur geringfügig in Mitleidenschaft gezogen werden. Es soll daher gezielt das Eindringen von Luft bzw. Luftsauerstoff verhindert, jedoch das Eindringen von Abwasser zugelassen werden. Wenn man davon ausgeht, daß sich auf den den porösen Körper bildenden Füllmaterialien ein 1-3 mm dicker Biofilm ausbildet, soll nach der Ausbildung eines fertigen Filmes ein nahezu gasdichter Verschluß erreicht werden, und zwar unter Berücksichtigung der Aufrechterhaltung der Verrieselungs- bzw. Spülfunktion in diesem Bereich.

Vorzugsweise wird bei dieser Ausführungsform die Verrieselungsanlage von einem Drehsprenger gebildet. Dies schließt jedoch nicht aus, daß auch hier das bei den vorstehend beschriebenen Ausführungsformen erwähnte Rohrsystem Anwendung finden kann.

Wenn ein solches sich über den Tropfkörperquerschnitt erstreckendes, fest installiertes Rohrsystem mit Öffnungen/Düsen Verwendung findet, was für sämtliche Ausführungsformen gilt, so kann dieses in Weiterbildung der Erfindung steuerbare Absperreinrichtungen aufweisen, über die eine gezielte Abwasserverteilung über den Querschnitt des Tropfkörpers ermöglicht wird. Sollen daher nur bestimmte Sektionen des Tropfkörpers mit Abwasser beaufschlagt werden, werden entsprechende Absperreinrichtungen angesteuert, die dann diesen Bereich des Rohrsystems absperren. Hierdurch ist eine gezielte Abwasserverteilung mit regelbarer Abwassermenge und regelbarer Beschickungsdauer/regelbarem Bschickungsintervall möglich. Als Absperreinrichtungen können Ventile, Schieber etc. Verwendung finden.

Die Steuerung kann über eine hydraulisch oder elektrisch bewegte Blende erfolgen, die den Zufluß zu einzelnen Rohren des Rohrsystems zuläßt oder unterbindet.

Bei sämtlichen Ausführungsformen ist der poröse Körper vorzugsweise in einem diesen umgebenden Bauwerk, insbesondere Behälter, installiert. Wenn eine gesonderte Tropfkörperabdeckung, insbesondere flexible Folie, Verwendung findet, wird diese in luftdichter Weise an die Seitenwand des Bauwerks bzw. Behälters angeschlossen.

Dieses Bauwerk bzw. dieser Behälter kann beispielsweise aus Beton, GFK, Metall oder einem Behälter mit einer Außenhülle aus anderem Material bestehen. Das Bauwerk kann rund, rechteckig oder als Polygon ausgebildet sein. Es kann einen geeigneten Boden aufweisen, auf dem der Tropfkörper steht, und/oder mit einem Tragrost versehen sein, auf dem der Tropfkörper angeordnet ist. Im Boden des Bauwerks oder im Zwischenraum zum porösen Körper können Drainagekanäle vorgesehen sein, über die das verrieselte Abwasser wieder abgeführt wird. Der Boden kann eine Vertiefung (kanalförmig, rund) aufweisen, in dem sich Schlamm sammeln kann, der von dort mit Rohrleitungen abgeführt werden kann. Eine Abführung mit Pumpen kann ebenfalls verwirklicht sein.

Was die Ausbildung des porösen Körpers selbst anbetrifft, so ist dieser vorzugsweise aus dem bereits erwähnten Füllmaterialien zusammengesetzt. Derartige Füllmaterialien können beispielsweise sein: Kunststoffpakete, Hochofenschlacke, Lavaschlacke, mineralische Schüttkörper, geschüttete Kunststoffkörper etc.

Der poröse Körper kann in der obersten Zone aus Füllkörpern bestehen, die durch schräge Kanäle eine Querverteilung bewirken. Ferner kann zur gezielten Spülung bestimmter Sektoren des Tropfkörpers eine Rezirkulation durchgeführt werden.

Die erfindungsgemäßen Ausführungsformen eignen sich insbesondere für flache Reaktoren. Hierdurch werden die Energiekosten gesenkt. Für die Wartung können einzelne Bereiche zugänglich gestaltet werden. Die erfindungsgemäßen Ausführungsformen können mit einer Schlammfalle unterhalb des porösen Körpers ausgestattet werden, wodurch die weitere Abwasserbehandlungsanlage weniger Schlamm erhält.

Die erfindungsgemäßen Ausführungsformen eignen sich besonders gut dazu, bestehende Tropfkörperanlagen mit einer Denitrifikationsstufe zu ergänzen, da keine Zwischenklärung erforderlich ist.

Die Erfindung wird nachfolgend anhand von Ausführungsbeispielen in Verbindung mit der Zeichnung im einzelnen erläutert. Es zeigen:
- Figur 1: einen schematischen Vertikalschnitt durch eine erste Ausführungsform einer Tropfkörpereinheit;
- Figur 2: einen Vertikalschnitt durch ein Verteilerrohr der Verrieselungsanlage mit dessen Umgebung:
- Figur 3: einen schematischen Vertikalschnitt durch eine zweite Ausführungsform einer Tropfkörpereinheit;
- Figur 4: einen schematischen Vertikalschnitt durch eine dritte Ausführungsform einer Tropfkörpereinheit; und
- Figur 5: einen Vertikalschnitt durch ein Verteilerrohr der Verrieselungsanlage der Ausführungsform der Figur 4.

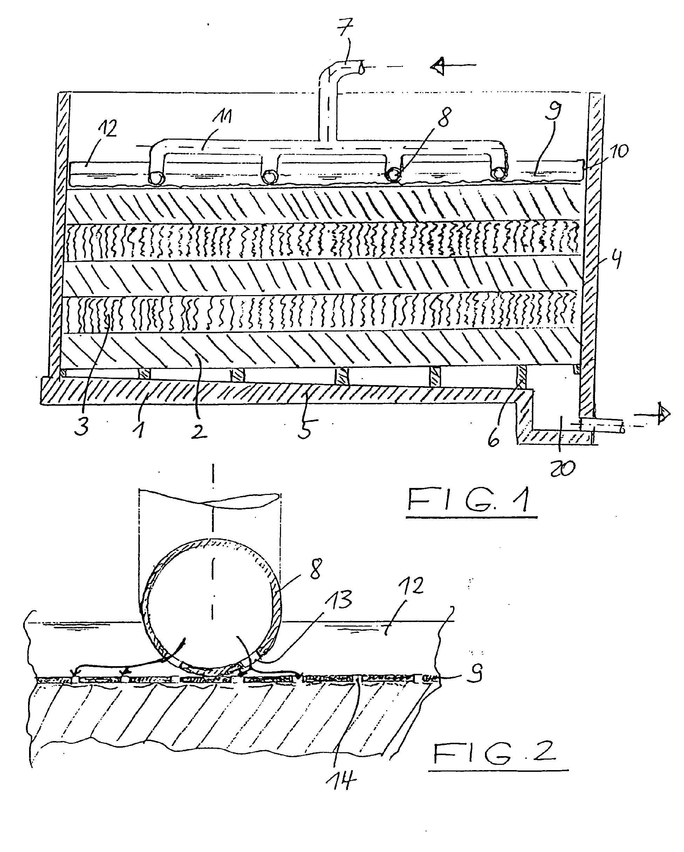

Die in Figur 1 schematisch im Vertikalschnitt dargestellte Tropfkörpereinheit 1 besitzt einen in einen rechteckigen Behälter 4 angeordneten, als poröser Körper 2 ausgebildeten Tropfkörper. Der Tropfkörper setzt sich aus einzelnen übereinander angeordneten Schichten 3 eines Füllmaterials zusammen. Derartige Füllmaterialien sind bekannt und werden an dieser Stelle nicht mehr im einzelnen beschriebenen. Beispielsweise kann es sich hierbei um Lavaschlacke handeln. Wesentlich ist, daß das Füllmaterial einen relativ hohen Porositätsgrad besitzt, damit sich im Betrieb des Tropfkörpers ein biologischer Film auf dem Füllmaterial aufbauen kann.

Der poröse Körper 2 ist auf einer Art Rost 6 angeordnet, welcher auf dem Boden 5 des Behälters 4 ruht. Auf diese Weise kann das den Tropfkörper durchdringende Abwasser am Boden des Behälters über einen geeigneten Abfluß 20 wieder abgeführt werden.

Die hier dargestellte Tropfkörpereinheit 1 dient zu Denitrifikationszwecken und wird daher unter Luftabschluß (Luftsauerstoffabschluß) betrieben. Das Abwasser gelangt über ein Zulaufrohr 7 in ein oberhalb des porösen Körpers 2 angeordnetes, fest installiertes Rohrsystem, das eine Vielzahl von Verteilerrohren 8 aufweist, die sich parallel zur Tropfkörperoberseite erstrecken und dessen Gesamtquerschnitt abdecken. Ein Vertikalschnitt durch ein Verteilerrohr 8 ist in Figur 2 gezeigt. Man erkennt, daß das Verteilerrohr 8 in seinem unteren Bereich Austrittsöffnungen 13 aufweist, über das das über das Zulaufrohr 7 zugeführte Abwasser auf die Oberseite des Tropfkörpers verrieselt werden kann.

Für den entsprechenden Luftabschluß des Tropfkörpers sorgt eine auf die Oberseite desselben gelegte flexible Folie 9, die, wie bei 10 gezeigt, luftdicht mit der Wandung des Behälters 4 verbunden ist. Die Folie 9 weist eine Vielzahl von Abwasserdurchtrittsöffnungen 14 auf, über die das von den Verteilerrohren 8 abgegebene Abwasser in den Tropfkörper eindringen kann. Im Betrieb wird dafür Sorge getragen, daß sich auf der Folie 9 eine Abwasserschicht 12 aufbaut, die für einen zusätzlichen Schutz der Folie und Luftabschluß dient.

Im Betrieb wird Abwasser über das Zulaufrohr 7 der Verrieselungsanlage zugeführt und an die einzelnen Verteilerrohre 8 des Rohrsystems 11 abgegeben. Es wird von dort auf die auf der Oberseite des Tropfkörpers befindliche flexible Folie 9 verrieselt, wobei dafür Sorge getragen wird, daß sich auf der Folie die erwähnte Abwasserschicht 12 aufbaut. Das Abwasser gelangt über die Durchtrittsöffnungen 14 in den eigentlichen Tropfkörper und durchsickert diesen, wobei es mit dem am Füllmaterial aufgebauten biologischen Film in Kontakt tritt und entsprechend behandelt (denitrifiziert) wird. Das behandelte Abwasser wird am Boden des Behälters gesammelt und über den Abfluß 20 abgeführt.

Durch die flexible Folie 9 wird ein ausreichender Luftabschluß des Tropfkörpers an der Oberseite erzielt, so daß auf aufwendige Dachkonstruktionen wie beim Stand der Technik verzichtet werden kann.

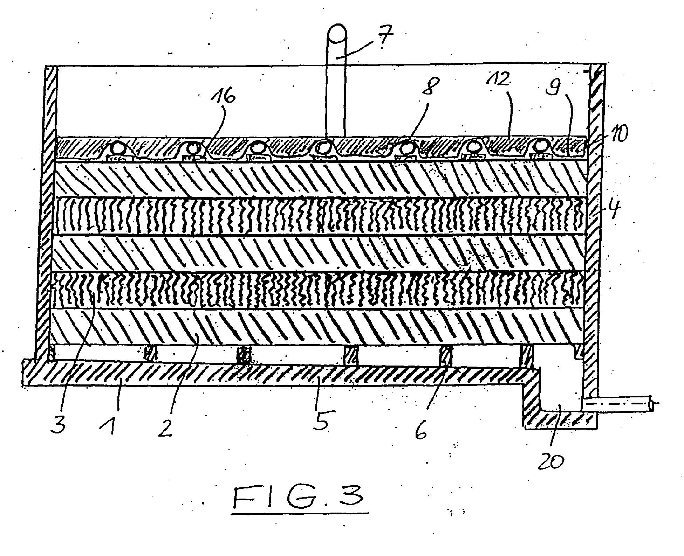

Figur 3 zeigt einen schematischen Vertikalschnitt durch eine zweite Ausführungsform einer Tropfkörpereinheit. Gleiche Bezugszeichen dienen zur Bezeichnung von gleichen Elementen. Auch hier befindet sich ein als poröser Körper 2 ausgebildeter Tropfkörper innerhalb eines mit einem Boden 5 versehenen Behälters 4, wobei der Tropfkörper auf einem Rost 6 angeordnet ist, so daß das behandelte Abwasser sich am Boden des Behälters sammeln und über den Abfluß 20 austreten kann. Auch dieser Tropfkörper dient zu Denitrifikationszwecken und wird daher unter Luftabschluß betrieben.

Die Funktionsweise der Tropfkörpereinheit entspricht der in den Figuren 1 und 2. Auch hier wird die Oberseite des Tropfkörpers über eine Verrieselungsanlage mit dem zu behandelnden Abwasser beaufschlagt. Das Abwasser gelangt über ein Zulaufrohr 7 in ein fest installiertes Rohrsystem, das eine Vielzahl von Verteilerrohren 8 besitzt, welche den Querschnitt des Tropfkörpers abdecken. Die Verteilerrohre 8 des Rohrsystems weisen wie bei der Ausführungsform 1 und 2 entsprechende Abwasseraustrittsöffnungen (Düsen) auf. Sie sind auf einzelnen Lagerelementen 16 angeordnet, die sich direkt auf der Oberseite des Tropfkörpers befinden. Diese Lagerelemente 16 dienen einerseits zur Lagerung der Verteilerrohre 8, haben jedoch andererseits die Aufgabe, das aus den Öffnungen der Verteilerrohre 8 austretende Abwasser über die Fläche des Tropfkörpers zu verteilen.

Bei dieser Ausführungsform wird der Luftabschluß an der Oberseite des Tropfkörpers ebenfalls über eine flexible Folie 9 erreicht, die seitlich luftdicht mit der Wandung des Behälters 4 verbunden ist, wie bei 10 gezeigt. Diese Folie befindet sich jedoch bei dieser Ausführungsform oberhalb der einzelnen Verteilerrohre 8 der Verrieselungsanlage.

Auch hier wird wiederum im Betrieb der Tropfkörpereinheit eine Abwasserschicht 12 auf der flexiblen Folie 9 aufgebaut, um diese zu schützen und den Luftabschluß zu fördern.

Die Funktionsweise der Tropfkörpereinheit entspricht im wesentlichen der der Figuren 1 und 2. Die flexible Folie 9 bildet einen luftdichten Abschluß des Tropfkörpers, so daß auch bei dieser Ausführungsform auf eine aufwendige Dachkonstruktion verzichtet werden kann.

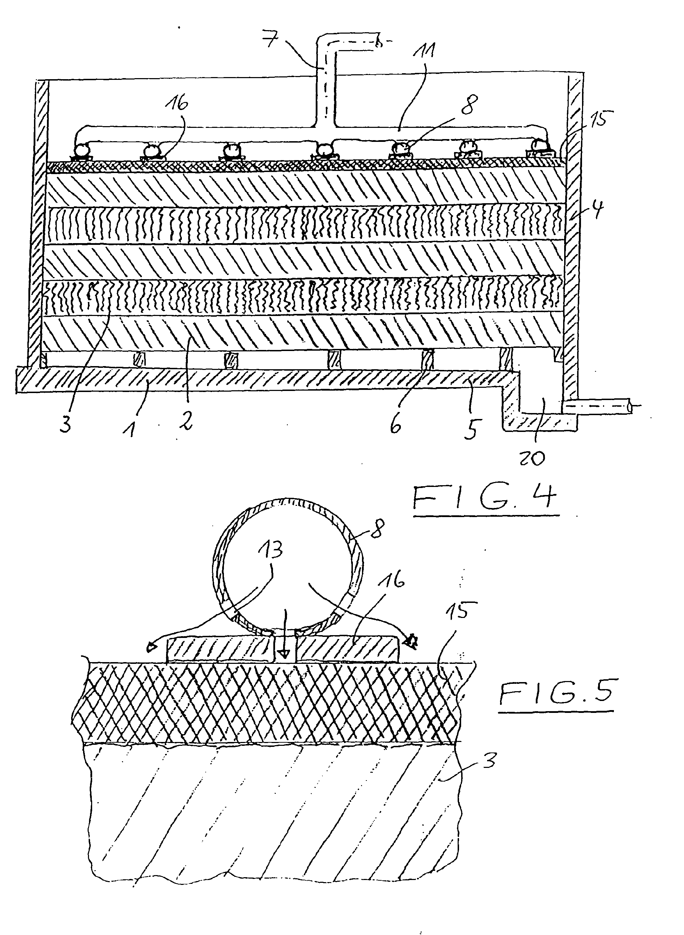

Figur 4 ist ein schematischer Vertikalschnitt durch eine dritte Ausführungsform einer Tropfkörpereinheit 1. Auch bei dieser Ausführungsform dienen gleiche Bezugszeichen zur Bezeichnung von gleichen Elementen wie bei den vorherigen Ausführungsformen. Ein als poröser Körper 2 ausgebildeter Tropfkörper, der aus einzelnen Füllschichten 3 besteht, ist auf einem Rost 6 innerhalb eines einen Boden 5 aufweisenden Behälters 4 angeordnet. Im Behälterboden ist ein Abfluß 20 für das behandelte Abwasser vorgesehen. Über eine Verrieselungsanlage, die ein Zulaufrohr 7 und ein Rohrsystem 11 mit einer Vielzahl von Verteilerrohren 8 aufweist, wird die Oberseite des Tropfkörpers mit dem zu behandelnden Abwasser beaufschlagt.

Auch bei dieser Ausführungsform liegen die Verteilerrohre 8 der Verrieselungsanlage, die im übrigen entsprechend ausgebildet ist wie die Verrieselungsanlagen der vorstehend beschriebenen Ausführungsformen, auf Lagerelementen 16 auf, die gleichzeitig das aus den Öffnungen 13 der Verteilerrohre 8 austretende Abwasser über die Oberseite des Tropfkörpers verteilen. Der Luftabschluß der Tropfkörpers wird jedoch bei dieser Ausführungsform nicht über ein vom Tropfkörper getrenntes Abdeckelement (Folie) erreicht, sondern über den Tropfkörper selbst. Dieser weist nämlich im oberen Bereich eine Schicht 15 auf, die eine im Vergleich zum übrigen Bereich geringere Porosität besitzt, so daß in dieser Schicht 15 der anwachsende biologische Film den Tropfkörper dort weitgehend verschließt und damit einen Lufteintritt verhindert. Andererseits verhindert die Schicht 15 jedoch nicht das gewünschte Einsickern des Abwassers.

Ein vergrößerter Vertikalschnitt durch ein Verteilerrohr 8 ist in Figur 5 dargestellt. Beispielsweise kann die in Figur 5 dargestellte Schicht 15 besonders engmaschig ausgebildet sein, um den gewünschten Verschlußeffekt gegenüber dem Eindringen von Luft zu erzielen. Jedenfalls ist die Porosität dieser Schicht 15 so zu wählen, daß in bezug auf das von der Verrieselungsanlage abgegebene Abwasser keine Verstopfung auftritt, jedoch das Eindringen von Luft in den Tropfkörper blockiert wird. Aus der Vielzahl der zur Verfügung stehenden Materialien kann der Fachmann ein solches auswählen, das die entsprechenden Anforderungen erfüllt.

Auch bei dieser Ausführungsform kann eine aufwendige Dachkonstruktion entfallen, da der Tropfkörper selbst den Luftabschluß übernimmt. Es ist dafür Sorge zu tragen, daß die Schicht 15 in luftdichter Weise an die Wandung des Behälters 4 angeschlossen ist.

Die hier dargestellte Tropfenabscheidereinheit funktioniert im wesentlichen wie die der Figuren 1 - 3.

## Patentansprüche

1. Tropfkörpereinheit einer Abwasserbehandlungsanlage mit
einem von einem porösen Körper gebildeten Tropfkörper,
einer Anlage zum Verrieseln des Abwassers über dem Tropfkörper und
einer Tropfkörperabdeckung, um das Eindringen von Luftsauerstoff in den Tropfkörper zu verhindern,
**dadurch gekennzeichnet, daß** die Tropfkörperabdeckung unterhalb der Verrieselungsanlage benachbart zur Tropfkörperoberseite angeordnet ist und eine Vielzahl von kleinen Abwasserdurchtrittsöffnungen (14) aufweist.

2. Tropfkörpereinheit nach Anspruch 1, **dadurch gekennzeichnet, daß** die Tropfkörperabdeckung als flexible Folie (9) ausgebildet ist.

3. Tropfkörpereinheit nach Anspruch 1 oder 2, **dadurch gekennzeichnet, daß** die Verrieselungsanlage als sich über den Tropfkörperquerschnitt erstreckendes, fest installiertes Rohrsystem (11) mit Öffnungen/Düsen (13) zum Abwasseraustritt ausgebildet ist.

4. Tropfkörpereinheit nach einem der vorangehenden Ansprüche, **dadurch gekennzeichnet, daß** im Betrieb der Tropfkörpereinheit auf der Tropfkörperabdeckung eine Abwasserschicht (12) vorhanden ist.

5. Tropfkörpereinheit nach Anspruch 1 oder 2, **dadurch gekennzeichnet, daß** die Verrieselungsanlage von einem Drehsprenger gebildet ist.

6. Tropfkörpereinheit einer Abwasserbehandlungsanlage mit
einem von einem porösen Körper gebildeten Tropfkörper,
einer Anlage zum Verrieseln des Abwassers über dem Tropfkörper und
einer Tropfkörperabdeckung, um das Eindringen von Luftsauerstoff in den Tropfkörper zu verhindern,
**dadurch gekennzeichnet, daß** die Verrieselungsanlage durch ein direkt auf dem porösen Körper (2) aufliegendes oder in diesen eingesenktes Rohrsystem gebildet ist, auf bzw. über dem die Tropfkörperabdeckung angeordnet ist.

7. Tropfkörpereinheit nach Anspruch 6, **dadurch gekennzeichnet, daß** die Tropfkörperabdeckung als flexible FOlie (9) ausgebildet ist.

8. Tropfkörpereinheit einer Abwasserbehandlungsanlage mit
einem von einem porösen Körper gebildeten Tropfkörper,
einer Anlage zum Verrieseln des Abwasser über dem Tropfkörper und
einer Tropfkörperabdeckung, um das Eindringen von Luftsauerstoff in den Tropfkörper zu verhindern,
**dadurch gekennzeichnet, daß** der poröse Körper (2) im oberen Bereich eine im Vergleich zum übrigen Bereich derart geringere Porosität besitzt, daß der anwachsende biologische Film den Körper dort weitgehend verschließt und damit einen Lufteintritt verhindert.

9. Tropfkörpereinheit nach Anspruch 8, **dadurch gekennzeichnet, daß** die Verrieselungsanlage von einem Drehsprenger gebildet ist.

10. Tropfkörpereinheit nach Anspruch 8, **dadurch gekennzeichnet, daß** die Verrieselunganlage von einem sich über den Tropfkörperquerschnitt erstreckenden, fest installierten Rohrsystem (8) mit Öffnungen/Düsen (13) gebildet ist.

11. Tropfkörpereinheit nach einem der vorangehenden Ansprüche, **dadurch gekennzeichnet, daß** das Rohrsystem (8) steuerbare Absperreinrichtungen aufweist, über die eine gezielte Abwasserverteilung über den Querschnitt des Tropfkörpers ermöglicht wird.

12. Tropfkörpereinheit nach einem der vorangehenden Ansprüche, **dadurch gekennzeichnet, daß** der poröse Körper (2) in einem Behälter (4) installiert ist.

13. Tropfkörpereinheit nach einem der vorangehenden Ansprüche, **dadurch gekennzeichnet, daß** der poröse Körper (2) auf einem Tragrost (6) steht.

14. Tropfkörpereinheit nach einem der vorangehenden Ansprüche, **dadurch gekennzeichnet, daß** der poröse Körper (2) in der obersten Zone aus Elementen besteht, die durch schräge Kanäle eine Querverteilung bewirken.

15. Tropfkörpereinheit nach einem der vorangehenden Ansprüche, **dadurch gekennzeichnet, daß** sie als Denitrifikationstropfkörpereinheit (1) ausgebildet ist.

16. Tropfkörpereinheit nach einem der Ansprüche 2 - 7 und 11 - 15, **dadurch gekennzeichnet, daß** die Folie (9) nach Art einer Schwimmbadabdeckung öffenbar und schließbar ist.
